Europäisches Patentamt

European Patent Office

Office européen des brevets

(11) Publication number: 0 337 740
A2

# EUROPEAN PATENT APPLICATION

(21) Application number: 89303582.4

(22) Date of filing: 11.04.89

(51) Int. Cl.⁴: B 60 K 5/04

(30) Priority: 11.04.88 JP 88627/88

(43) Date of publication of application:
18.10.89 Bulletin 89/42

(84) Designated Contracting States: DE FR GB IT SE

(71) Applicant: HONDA GIKEN KOGYO KABUSHIKI KAISHA
1-1, Minami-Aoyama 2-chome
Minato-ku Tokyo (JP)

(72) Inventor: Kazuo, Inoue
3-6-1, Takanodai, Nerima-ku
Tokyo (JP)

Tsuneo, Konno
6-12-36-312, Kashiwa-cho
Shiki-shi Saitama (JP)

Hiroo, Shimada
2-11-11-302, Nishimizuhodai
Fujimi-shi Saitama (JP)

Kenichi, Nagahiro
480-7, Ohaza-kishi
Kawagoe-shi Saitama (JP)

(74) Representative: Leale, Robin George et al
FRANK B. DEHN & CO. Imperial House 15-19 Kingsway
London WC2B 6UZ (GB)

(54) Mounting structure for the unit of a motor vehicle.

(57) A power unit mounting structure in a motor vehicle includes a power unit P comprising an engine 2 having a crankshaft 2a, a transmission 3 coupled to the crankshaft of the engine, and a differential 4 interposed between drive axles 5 connected to a pair of laterally spaced front road wheels of the motor vehicle and the transmission. The power unit is mounted in a front portion of the motor vehicle and tilted forwardly with respect to the running direction of the motor vehicle with the crankshaft extending transversely. The center of gravity G of the power unit is positioned rearwardly of the drive axles. The intake system 7 coupled to the engine is positioned forwardly of the engine and the exhaust system 11 coupled to the engine extends rearwardly from the engine.

FIG. 1.

EP 0 337 740 A2

**Description**

## MOUNTING STRUCTURE FOR THE POWER UNIT OF A MOTOR VEHICLE

The present invention relates to a power unit mounting structure of a motor vehicle including a power unit comprising an engine having a crankshaft, a transmission coupled to the crankshaft of the engine, and a differential interposed between a pair of laterally spaced front road wheels of the motor vehicle and the transmission, the power unit being mounted in a front portion of the motor vehicle with respect to the direction in which the motor vehicle runs, with the crankshaft extending transversely with respect to the motor vehicle.

One power unit mounting structure of this general type is known from U.S. Patent No. 3,186,507. With the known power unit mounting structure, the center of gravity of the power unit is positioned above the drive axis of a pair of laterally spaced front road wheels or forwardly of those drive axles with respect to the direction in which the motor vehicle runs. Therefore, a greater load is applied by the weight of the power unit to the front road wheels than to the rear road wheels. For better running characteristics of the motor vehicle, however, it is desirable that equal loads be distributed to the front and rear road wheels.

It is an object of the present invention to provide a mounting structure for mounting the power unit of a motor vehicle to better equalize loads applied by the power unit to front and rear road wheels for improved running characteristics of the motor vehicle and for increased intake and exhaust efficiency of the engine of the power unit.

According to the present invention, the power unit is mounted in a front portion of the motor vehicle with its center of gravity positioned rearwardly of the drive axles extending from the differential toward the front road wheels with respect to the running direction of the motor vehicle, the intake system coupled to the engine is positioned forwardly of the engine, and the exhaust system coupled to the engine extends rearwardly from the engine with respect to the running direction.

With such an arrangement, since the power unit is disposed behind the drive axles of the front road wheels with respect to the running direction, loads applied by the weight of the power unit to the front and rear road wheels are better equalized for improved running characteristics of the motor vehicle. The intake and exhaust systems are of a cross-flow arrangement for increased intake and exhaust efficiencies.

According to a preferred feature of the invention, the power unit is tilted forwardly from the vertical direction with respect to the running direction. This enables the intake and exhaust system to be arranged with ease.

Two exemplary embodiments of the present invention will hereinafter be described with reference to the drawings, wherein:

Fig. 1 is a plan view of a first embodiment of the invention;

Fig. 2 is a side elevation view of the embodiment of Fig. 1;

Fig. 3 is a plan view of a second embodiment of the invention; and

Fig. 4 is a side elevation view of the embodiment of Fig. 3.

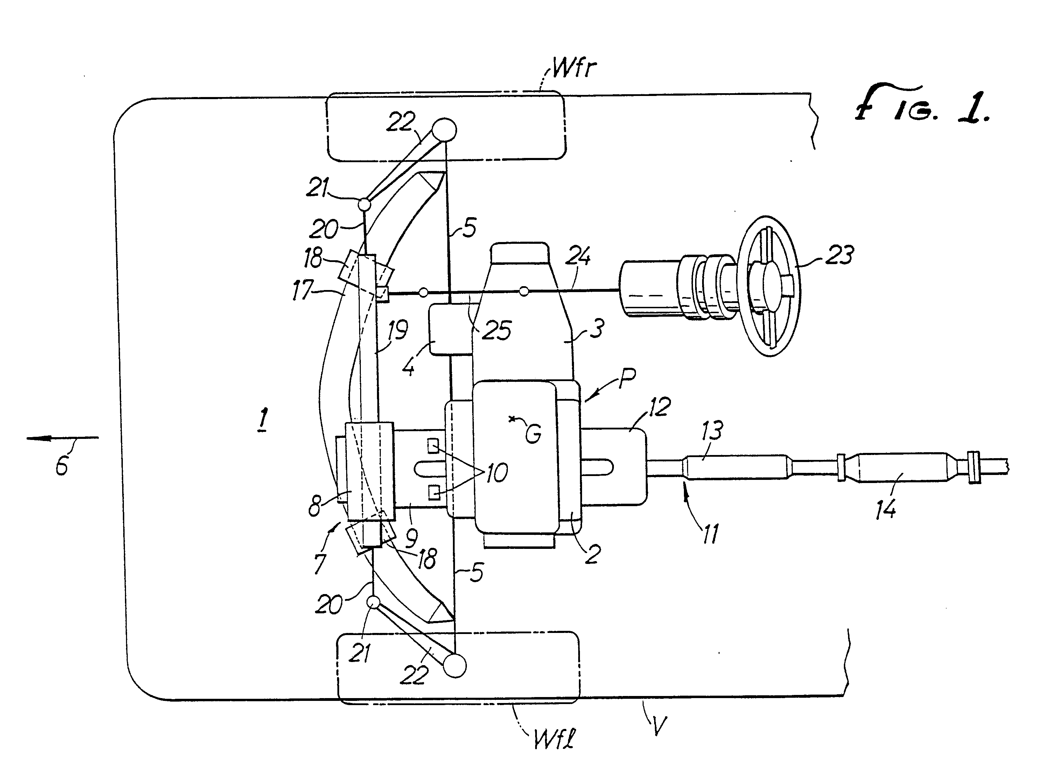

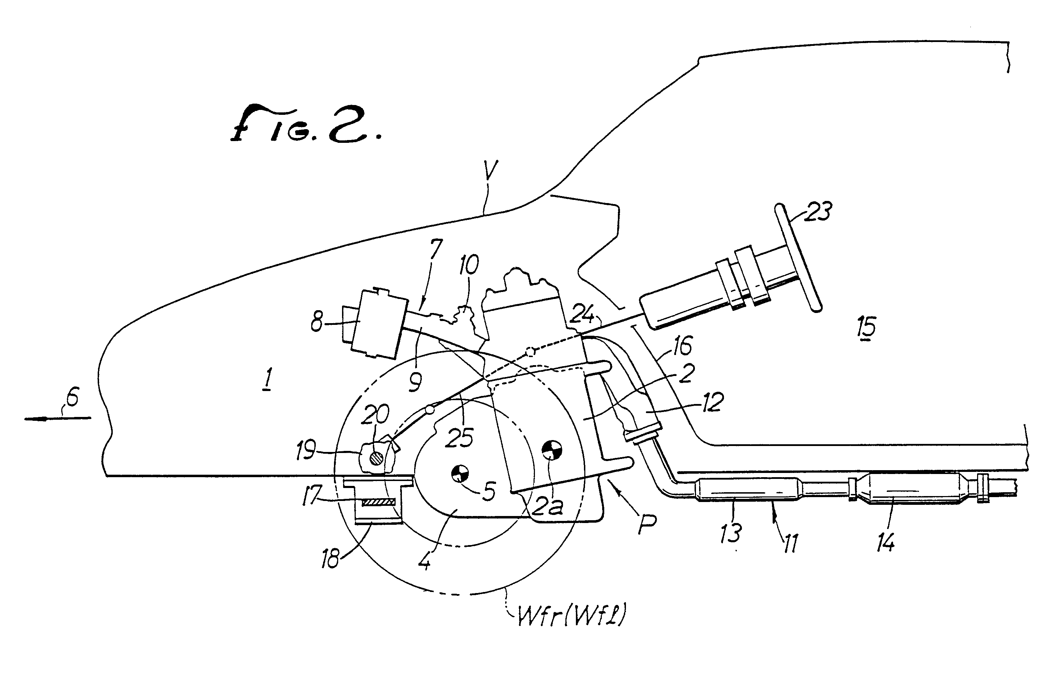

In FIGS. 1 and 2, a motor vehicle V is a FF (front engine/front drive) motor vehicle having a power unit P mounted in an engine compartment 1 defined in a front portion of the motor vehicle V.

The power unit P comprises an engine 2 having a crankshaft 2a, a transmission 3 coupled to the crankshaft 2a, and a differential 4 interposed between a pair of drive axles 5 connected to a pair of laterally spaced front road wheels Wfℓ, Wfr of the motor vehicle V and the transmission 3. The power unit P is disposed in the engine compartment 1 such that the crankshaft 2a of the engine 2 extends in a transverse direction of the motor vehicle V and the power unit P has its center of gravity G positioned rearwardly of the drive axles 5 that extend from the differential 4 toward the front road wheels Wfℓ, Wfr, with respect to a direction 6 in which the motor vehicle runs.

The transmission 3 is joined to one end of the engine 2 in the axial direction of the crankshaft 2a. The differential 4 is joined to a front portion of the transmission 3 for connection to the drive axles 5. The power unit P located in the engine compartment 1 is tilted forwardly from the vertical in the running direction 6.

An intake system 7 for supplying an air-fuel mixture to the engine 2 comprises an air cleaner 8, an intake manifold 9 interconnecting the air cleaner 8 and intake ports (not shown) or the engine 2, and fuel injection valves 10 for injecting fuel toward the intake ports into air supplied from the air cleaner 8 to the intake ports to produce an air-fuel mixture. The intake system 7 extends forwardly in the running direction 6 from an upper front end portion of the engine 2.

An exhaust system 11 for disoharging exhaust gases from the engine 2 comprises an exhaust manifold 12 connected to exhaust ports (not shown) of the engine 2, a flexible pipe 13 coupled to the exhaust manifold 12, a catalytic converter 14 connected to the rear end of the flexible pipe 13, and a muffler (not shown) joined to the rear end of the catalytic converter 14. The exhaust system 11 extends rearwardly in the running direction 6 from an upper rear end portion of the engine 2. The exhaust manifold 12 has an appropriate length to increase the output power of the engine 2. The exhaust manifold 12 extends downwardly along a rear portion of the engine 2 between the forwardly tilted engine 2 and a toeboard 16 which separates the engine compartment 1 from a passenger compartment 15. The flexible pipe 13 connected to the exhaust manifold 12 is bent so as to extend rearwardly along the running direction 6. This arrangement allows the catalytic converter 14 to be positioned as closely to the engine 2 as possible.

A leaf spring 17 is used as a suspension to support the front road wheels Wfℓ, Wfr on a vehicle body (not shown). The leaf spring 17 is positioned in front of the power unit P and the drive axles 5 with respect to the running direction 6, and is supported at its central portion in the transverse direction of the motor vehicle V on the vehicle body by means of supports 18. The opposite ends of the leaf spring 17 are connected respectively to the front road wheels Wfℓ, Wfr. The leaf spring 17 is curved such that the longitudinally central portion of the leaf spring 17, i.e., the central portion thereof in the transverse direction of the motor vehicle V, is positioned forwardly of the opposite ends of the leaf spring 17 in the running direction 6 in order to accommodate the forwardly projecting differential 4 of the power unit P.

The front road wheels Wfℓ, Wfr can be steered by a steering gear box 19 disposed forwardly of the drive axles 5 and upwardly of the leaf spring 17. The steering gearbox 19 has a pair of tie rods 20 extending parallel to the drive axles 5 and connected to a rack bar (not shown) movable laterally in the steering gearbox 19 in response to steering operation. The tie rods 20 are connected respectively to hub carriers 22 of the front road wheels Wfℓ, Wfr through respective ball joints 21.

A steering wheel 23 is positioned in the passenger compartment 15 at the driver's seat and connected to a steering shaft 24 which is coupled to a pinion (not shown) in the steering gearbox 19 through a steering joint 25. The pinion meshes with the rack bar. The steering shaft 24 and the steering joint 25 are disposed laterally of the engine 2 and above the transmission 3.

The above embodiment offers the following advantages: Since the center of gravity G of the power unit P is located rearwardly of the drive axles 5 of the front road wheels Wfℓ, Wfr with respect to the running direction 6, the gravitational loads applied by the power unit P to the front road wheels Wfℓ, Wfr and rear road wheels (not shown) are better equalized for improved running characteristics of the motor vehicle.

The intake system 8 is disposed forwardly of the engine 2 and the exhaust system 11 is disposed rearwardly of the engine 2. Therefore, the intake and exhaust systems 8, 11 are of a cross-flow arrangement with respect to the engine for increasing intake and exhaust efficiencies to increase the output power of the engine. Inasmuch as the power unit P is forwardly tilted, the intake ports of the engine 2 are directed substantially in-line with the intake manifold 9 to lower the resistance to the flow of air in the intake system 8. With the forwardly tilted power unit P, moreover, the drive axles 5, the steering gearbox 19, and the leaf spring 17 can easily be positioned in front of the power unit P, and the engine hood covering the engine compartment 1 does not have to be raised. In addition, the forwardly tilted power unit P facilitates the installation of the exhaust system 11 between the engine 2 and the toeboard 16 which is also forwardly tilted.

The catalytic converter 14 is connected to the exhaust manifold 12 through the flexible pipe 13 which is bent to position the catalytic converter 14 as close to the engine 2 as possible whereby the catalytic converter can perform properly. More specifically, even when the temperature of exhaust gases is low in a lean-burn range in which a lean air-fuel mixture is burned for better fuel economy, it is possible to keep the temperature of exhaust gases as they flow into the catalytic converter 14 at an elevated temperature level required to perform the function of the catalytic converter 14 properly since the catalytic converter 14 is located near the engine 2. The exhaust system 11 disposed behind the power unit P with respect to the running direction 6 is prevented from being subjected to ram air, and hence the temperature of exhaust gases is prevented from being lowered upstream of the catalytic converter 14. Accordingly, the catalytic converter 14 can efficiently effect its gas purifying operation.

The steering gearbox 19 is situated forwardly of the drive axles 5 and the leaf spring 17 is located below the steering gearbox 19, making it possible to position the power unit P behind the drive axles 5. Since the leaf spring 17 is curved with its longitudinally central portion positioned forwardly of its opposite ends in the running direction 6, the leaf spring 17 is positioned out of physical interference with the power unit P for achieving a sufficient stroke and leveling.

Inasmuch as the steering gearbox 19 is positioned in front of the drive axles 5, the steering shaft 24 and the steering gearbox 19 are connected to each other without undue limitations and hence can be designed with ease.

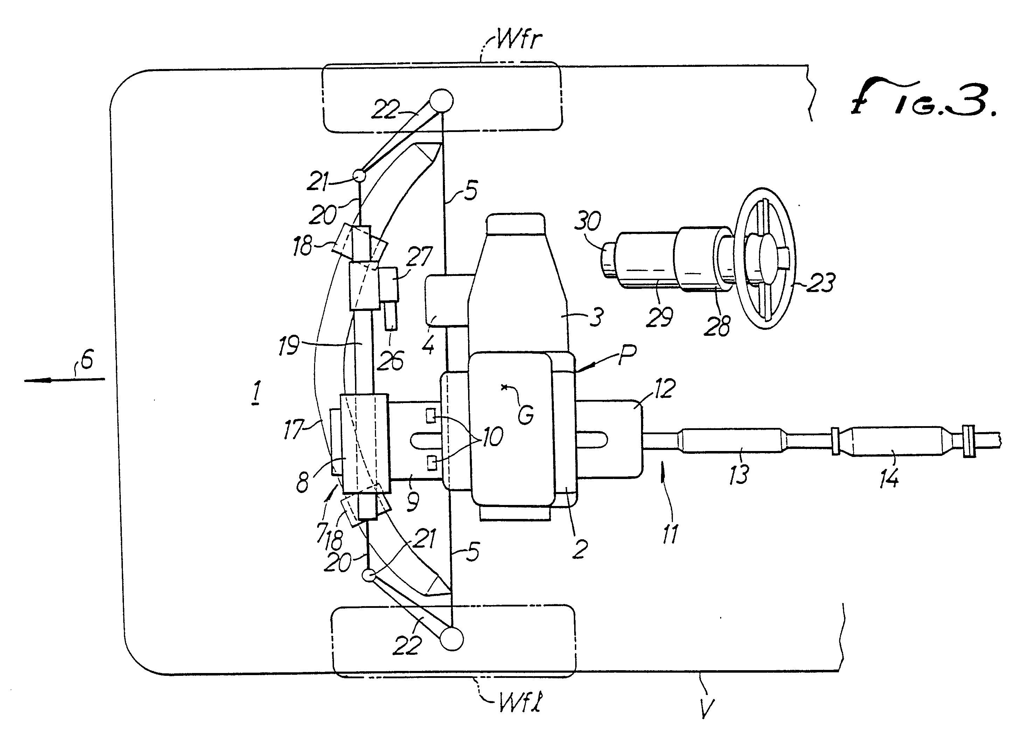

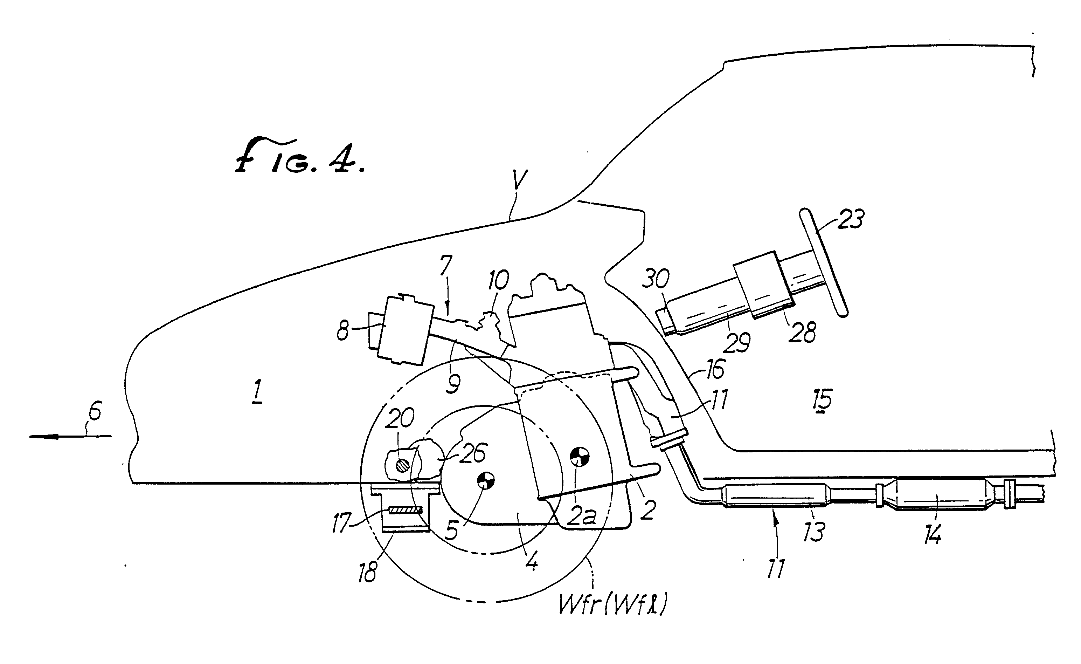

FIGS. 3 and 4 show another embodiment of the present invention. Those parts in FIGS 3 and 4 which are identical to those of the preceding embodiment are denoted by identical reference numerals.

According to the embodiment of FIGS. 3 and 4, a motor 26 which is actuatable by an interval or stroke commensurate with a steered angle produced by turning the steering wheel 23 is associated with the steering gearbox 19, and the steering wheel 23 is not directly coupled to the steering gearbox 19. The motor 26 is jointed to the steering gearbox 19 through a motor-driven steering gearbox 27. The rack bar in the steering gearbox 19 is movable laterally by a distance dependent on the interval or stroke which the motor 26 is actuated. The steering wheel 23 is associated with an input angle sensor 28, a reactive force motor 29, and a steered angle sensor or tachometer generator 30. The motor 26 is energizable in response to an output signal from the steered angle sensor 30.

With the embodiment shown in FIGS. 3 and 4, as the steering gearbox 19 and the steering wheel 23 are not directly connected to each other, any members which would otherwise be required to mechanically interconnect the steering gearbox 19 and the steering wheel 23 are unnecessary. Therefore, the weight of the motor vehicle is reduced, and the steering wheel 23 may be located on a lefthand or righthand side of the motor vehicle.

According to the features of the present embodiments, the power unit is mounted in a front portion of the motor vehicle with its center of gravity positioned rearwardly of the drive axles extending from the differential toward the front road wheels with respect to the running direction of the motor vehicle, the intake system coupled to the engine is positioned forwardly of the engine, and the exhaust system coupled to the engine extends rearwardly from the engine with respect to the running direction. Consequently, loads applied by the weight of the power unit to the front and rear road wheels are better equalized for improved running characterisitics of the motor vehicle. The intake and exhaust systems are of a cross-flow arrangement for increased intake and exhaust efficiencies. The power unit is tilted forwardly from the vertical direction with respect to the running direction whereby the intake and exhaust systems can be arranged with ease.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon. Furthermore the manner in which any of such features of the specification or claims are described or defined may be amended, broadened or otherwise modified in any manner which falls within the knowledge of a person skilled in the relevant art, for example so as to encompass, either implicitly or explicitly, equivalents or generalisations thereof.

## Claims

1. A power unit mounting structure in a motor vehicle including a power unit comprising an engine having a crankshaft, a transmission coupled to the crankshaft of the engine, and a differential interposed between drive axles connected to a pair of laterally spaced front road wheels of the motor vehicle and the transmission, the power unit being mounted in a front portion of the motor vehicle with respect to the running direction of the motor vehicle, with the crankshaft extending transversely with respect to the motor vehicle, characterized in that said power unit is mounted in the front portion of the motor vehicle with its center of gravity positioned rearwardly of the drive axles extending from the differential toward the front road wheels with respect to said running direction, an intake system coupled to the engine is positioned forwardly of the engine, and an exhaust system coupled to the engine extends rearwardly from the engine with respect to said running direction.

2. A power unit mounting structure according to claim 1, wherein the power unit is tilted forwardly from the vertical in the running direction.

Fig. 1.

Fig. 2.

Fig.3.

FIG.4.

EP 0 337 740 A2